# EUROPÄISCHE PATENTSCHRIFT

(11) **EP 1 645 211 B1**
(45) Veröffentlichungstag und Bekanntmachung des Hinweises auf die Patenterteilung: **13.07.2016**
(21) Anmeldenummer: 05018880.4
(22) Anmeldetag: 31.08.2005
(51) Int. Cl.: A47B 88/00, F16B 12/46

(54) **Schublade mit einer Stabilisierungsvorrichtung**
Drawer with stabilising device
Tiroir avec dispositif de stabilisation

(30) Priorität: 08.10.2004 AT 16862004
(43) Veröffentlichungstag der Anmeldung: 12.04.2006
(73) Patentinhaber: Julius Blum GmbH, 6973 Höchst (AT)
(72) Erfinder: Hämmerle, Hermann, 6890 Lustenau (AT)
(74) Vertreter: Torggler & Hofinger Patentanwälte

(56) Entgegenhaltungen:
- EP-A1- 0 429 339
- FR-A1- 2 365 313
- GB-A- 383 087
- GB-A- 522 026
- GB-A- 655 791
- GB-A- 1 090 183
- US-A- 1 403 037
- US-A- 2 568 225

## Beschreibung

Die vorliegende Erfindung bezieht sich auf eine Schublade mit den Merkmalen des Oberbegriffs des Patentanspruchs 1.

Im Weiteren betrifft die Erfindung ein Möbel mit zumindest einer Schublade der zu beschreibenden Art.

Um eine Bewegbarkeit von Frontblenden gegenüber den Zargen bzw. dem Schubladenboden zu ermöglichen, werden diese mittels dafür vorgesehenen Halte- oder Verstelleinrichtungen, die üblicherweise im Inneren der Schubladenzarge angeordnet sind, gehaltert. Mit Hilfe dieser Verstelleinrichtungen kann nun die Frontblende bei Bedarf höhen-, quer- und/oder in ihrer Neigung gegenüber den Schubladenzargen verstellt werden. Damit kann beispielsweise die Fuge zu benachbarten Frontblenden in gleichmäßiger Breite eingestellt oder die Ausrichtung der Frontblende in Bezug zum Möbelkorpus ordnungsgemäß vorgenommen werden. Das bedeutet, dass die Frontblende mit dem Fachboden nicht unverrückbar verschraubt werden darf, sondern dass die gegenseitige Verbindung eine Relativbewegung der Frontblende zum Fachboden erlaubt. Diese Tatsache führt insbesondere bei hohen oder flächenmäßig großen Frontblenden zu einem instabilen Verhalten derselben, sodass bei Betätigung der Frontblende unangenehme Schlaggeräusche auftreten können. Diese Instabilität führt zudem zu einer erhöhten Beanspruchung der Halte- und Verstelleinrichtungen und beeinträchtigt nachteilig die exakte Führung des Schubkastens.

In der US 1,403,037 ist ein Bücherregal mit einer schwenkbaren Klappe beschrieben, wobei zum Bewegen der Klappe ein L-förmiger Hebel und ein Verbindungshebel vorgesehen sind. Zur leichteren Betätigung der Klappe ist eine Feder vorgesehen, welche einerseits am Möbelkorpus, andererseits am L-förmigen Hebel festgelegt ist.

In der GB 522 026 ist eine Karteischublade gezeigt, welche zum Zweck der verbesserten Zugänglichkeit zu den Karteikarten eine relativ zu den Seitenwänden neigbare Frontblende aufweist. Hierfür ist eine abgewinkelte Stange vorgesehen, durch welche die Frontblende um eine horizontal verlaufende Drehachse in eine geneigte Lage schwenkbar ist.

Aufgabe der vorliegenden Erfindung ist es daher, eine Schublade der eingangs erwähnten Gattung unter Vermeidung oben genannter Nachteile vorzuschlagen.

Dies wird erfindungsgemäß durch die Merkmale des Patentanspruchs 1 gelöst. Weitere vorteilhafte Ausgestaltungen der Erfindung sind in den abhängigen Ansprüchen angegeben.

Die Stabilisierungsvorrichtung wird somit einerseits am Fachboden und andererseits an der Frontblende montiert, wobei der flexible Mittelteil eine Relativbewegung dieser beiden Möbelteile zueinander erlaubt. Je nach Ausbildung des flexiblen Mittelteiles kann auch eine zusätzliche Stabilisierung der beiden Möbelteile zueinander ermöglicht werden.

Vorteilhaft ist vorgesehen, dass der Mittelteil in Richtung (Z) einer gedachten Verbindungslinie zwischen ersten und zweiten Montagestellen zugfest ausgebildet ist. Durch den vorgegebenen axialen Abstand der beiden Montagestellen zueinander wird der Bewegung der Frontblende in Bezug zum Fachboden Widerstand geleistet, wodurch eine vorteilhafte Stabilisierung erzielt wird. Gemäß der Erfindung ist vorgesehen, dass die ersten und zweiten Montagestellen relativ zueinander zumindest in einer Richtung (X, Y) quer zur Richtung (Z) einer gedachten Verbindungslinie zwischen ersten und zweiten Montagestellen beweglich sind.

Bei der konstruktiven Ausführung kann es von Vorteil sein, dass der flexible Mittelteil zumindest ein Seilstück umfasst. Alternativ oder ergänzend kann auch vorgesehen sein, dass der flexible Mittelteil zumindest eine flexible Stange aufweist. Eine bevorzugte Ausführungsform sieht günstigerweise vor, dass der flexible Mittelteil zwei oder mehrere - vorzugsweise zueinander parallel beabstandet angeordnete - biegsame Lamellen aufweist.

Das erfindungsgemäße Möbel ist durch zumindest eine Schublade der beschriebenen Art gekennzeichnet.

Weitere Einzelheiten und Vorteile der vorliegenden Erfindung werden anhand der Figurenbeschreibung unter Bezugnahme auf die Zeichnungen im Folgenden näher erläutert. Darin zeigt bzw. zeigen:
- Fig. 1a-1c: ein beispielhaftes Ausführungsbeispiel einer Stabilisierungsvorrichtung in perspektivischen Darstellungen,
- Fig. 2: eine Schnittdarstellung durch zwei miteinander verbundene Möbelteile mit der Stabilisierungsvorrichtung aus den Fig. 1a bis 1c,
- Fig. 3: ein weiteres Ausführungsbeispiel einer Stabilisierungsvorrichtung in einer Unteransicht im montierten Zustand,
- Fig. 4: die Stabilisierungsvorrichtung aus Fig. 3 in querverstellter Position,
- Fig. 5: eine Unteransicht auf den Fachboden mit einer dazu vertikal stehenden Frontblende sowie eine Detailansicht der zu positionierenden Stabilisierungsvorrichtung,
- Fig. 6: eine Teilansicht einer Schublade von unten mit montierter Stabilisierungsvorrichtung
- Fig. 7a, 7b: eine Teilansicht einer Schublade von der Seite mit vertikaler Verstellung der Frontblende

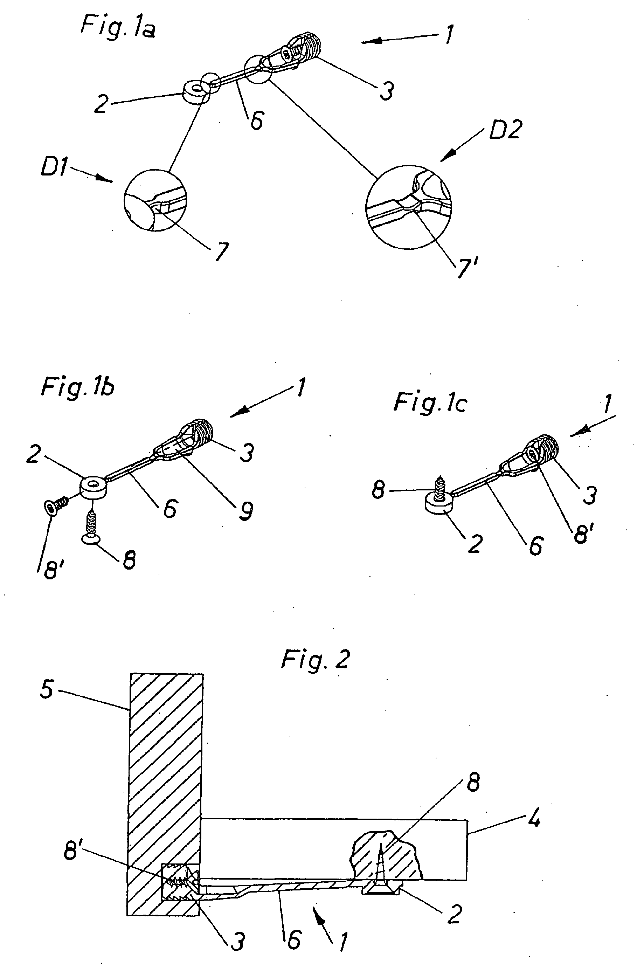

Fig. 1a bis 1c zeigen perspektivische Darstellungen anhand eines Ausführungsbeispiels der Stabilisierungsvorrichtung 1. Die Stabilisierungsvorrichtung 1 weist zwei Befestigungsstellen 2, 3 auf, die zur jeweiligen Befestigung an zwei nicht dargestellten Möbelteilen 4, 5, insbesondere an einem Fachboden und einer dazu beweglich gelagerten Frontblende vorgesehen ist. Die Längsachsen der beiden Befestigungsstellen 2, 3 sind im rechten Winkel zueinander angeordnet. Zwischen den beiden Befestigungsstellen 2, 3 ist ein flexibler Mittelteil 6 ausgebildet, der eine Bewegbarkeit der beiden Befestigungsstellen 2, 3 zueinander erlaubt. An den distalen Enden des Mittelteiles 6 sind verjüngte Ansätze 7, 7' vorgesehen, so wie dies in den Detailansichten D1 und D2 der Fig. 1 a ersichtlich ist. Durch diese verjüngten Ansätze 7, 7' wird die Bewegbarkeit der Stabilisterungsvorrichtung 1 quer bzw. senkrecht zur gedachten Verbindungslinie zwischen den Befestigungsstellen 2, 3 verbessert. Fig. 1b zeigt die Stabilisierungsvorrichtung 1 mit außer Eingriff befindlichen Befestigungsschrauben 8, 8'. Die Montagestelle 2 ist als Durchgangsbohrung zum Einsetzen einer In das Möbeltell 4 einschraubbaren Schraube 8 ausgeführt. Im Bereich der zweiten Befestigungsstelle 3 ist eine rinnenförmige Vertiefung 9 zur Führung der Schraube 8' vorgesehen. Die Befestigungsstelle 2 ist als Spreizdübel ausgeführt, der zum Einsetzen in eine Bohrung eines Möbelteils 5 - vorzugsweise in eine Bohrung der Frontblende - ausgebildet ist. Zur verbesserten Verankerung können an der Außenfläche des Spreizdübels Rippen und/oder Verzahnungen vorgesehen werden. Fig. 1c zeigt die Stabilisierungsvorrichtung 1 mit eingesetzten Schrauben 8, 8'. Dabei kann vorgesehen sein, dass die Schraube 8' im Spreizdübel bereits vormontiert ist, um die Befestigung der Stabilisierungsvorrichtung 1 an den Möbelteilen 4, 5 zu erleichtern.

Fig. 2 zeigt einen Vertikalschnitt zweier Möbelteile 4, 5, im vorliegenden Fall durch einen Fachboden 4 und einer im rechten Winkel dazu stehenden Frontblende 5. Die beiden Möbelteile 4, 5 sind vorzugsweise mit einer nicht dargestellten Verbindungseinrichtung verbunden, die eine Relativbewegung der Frontblende 5 in Bezug zum Fachboden 4 erlaubt. Dabei kann vorteilhaft vorgesehen werden, dass zusätzlich zu der vorstehend erwähnten Verbindungseinrichtung die Stabilisierungsvorrichtung 1 vorgesehen ist, die eine verbesserte Stabilisierung bei gleichzeitiger Bewegbarkeit der beiden Möbelteile 4, 5 zueinander bewirkt. Der als Befestigungsstelle 1 ausgebildete Spreizdübel wird dabei in eine Bohrung der Frontblende 5 eingesetzt und durch die Schraube 8' verspreizt, während die als Befestigungsstelle 2 ausgebildete Durchgangsbohrung zur Aufnahme einer Spanplättenschraube 2 vorgesehen ist, die mit dem Fachboden 4 fest verschraubt wird. Der flexibel ausgebildete Mittelteil 6 bewirkt durch seine zugfeste Ausbildung in axialer Richtung sowie durch seine vertikale und laterale Bewegbarkeit eine vorteilhafte Stabilisierung der beiden Möbelteile 4, 5 zueinander.

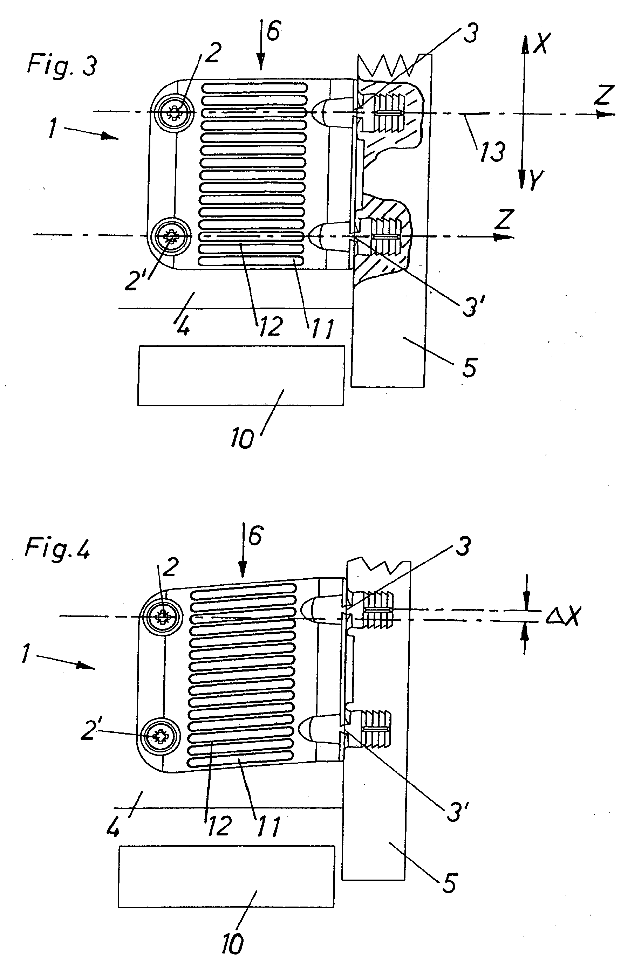

Fig. 3 zeigt ein weiteres Ausführungsbeispiel der Stabilisierungsvorrichtung 1 in einer Unteransicht, Die Stabilisierungsvorrichtung 1 ist einerseits auf der Unterseite des Fachbodens 4 und andererseits an der Innenseite der Frontblende 5 montiert, wobei mit 10 eine Möbelseitenwand dargestellt ist. In der gezeigten Figur sind auf jeder Seite des flexiblen Mittelteils 6 zwei Montagestellen 2, 2' sowie 3, 3' vorgesehen: Die Montagestellen 2, 2' sind als Durchgangsbohrungen zum Einsetzen von Schrauben ausgeführt, die fest mit dem Fachboden 4 verschraubt werden. In den entsprechenden Bohrungen der Frontblende 5 werden die als Spreizdübel ausgeführten Montagestellen 3, 3' eingeführt und durch Schrauben mit dieser verklemmt. Die Stabilisierungsvorrichtung 1 ist - abgesehen von vormontierten Schrauben - einstückig ausgebildet und besteht vorzugsweise aus Kunststoff. Der flexible Mittelteil 6 weist zwei oder mehrere - in der gezeigten Darstellung 16 - zueinander parallel beabstandete und biegsame Lamellen 12 auf, die durch langlochartige Öffnungen 11 voneinander getrennt sind. Um eine günstige Bewegbarkeit zu erreichen kann vorgesehen sein, dass die Breite der langlochartigen Öffnungen 11 größer oder gleich groß wie die doppelte Breite der Lamellen 12 sind. Der flexible Mittelteil 6 ist in Richtung Z einer gedachten Verbindungslinie13 zwischen erster Montagestelle 2 und zweiter Montagestelle 3 zugfest ausgebildet. Günstigerweise ist vorgesehen, dass die ersten Montagestellen 2, 2' und die zweiten Montagestellen 3, 3' zumindest in einer Richtung X, Y quer zur Richtung Z einer gedachten Verbindungslinie 13 zwischen ersten Montagestellen 2, 2' und zweiten Montagestellen 3, 3' beweglich sind.

Fig. 4 zeigt die Stabilisierungsvorrichtung 1 aus Fig. 3 in einer querverstellten Position, das heißt, die Befestigungsstellen 3, 3' sind in Bezug zu den Befestigungsstellen 2, 2' bzw. zum Fachboden 4 um die Längenänderung ΔX verschoben. Diese Anpassung an die verschobene Frontblende 5 wird durch den flexiblen Mittelteil 6 ermöglicht, wobei die Breite der langlochartigen Öffnungen 11 die Längenänderung ΔX beeinflussen kann.

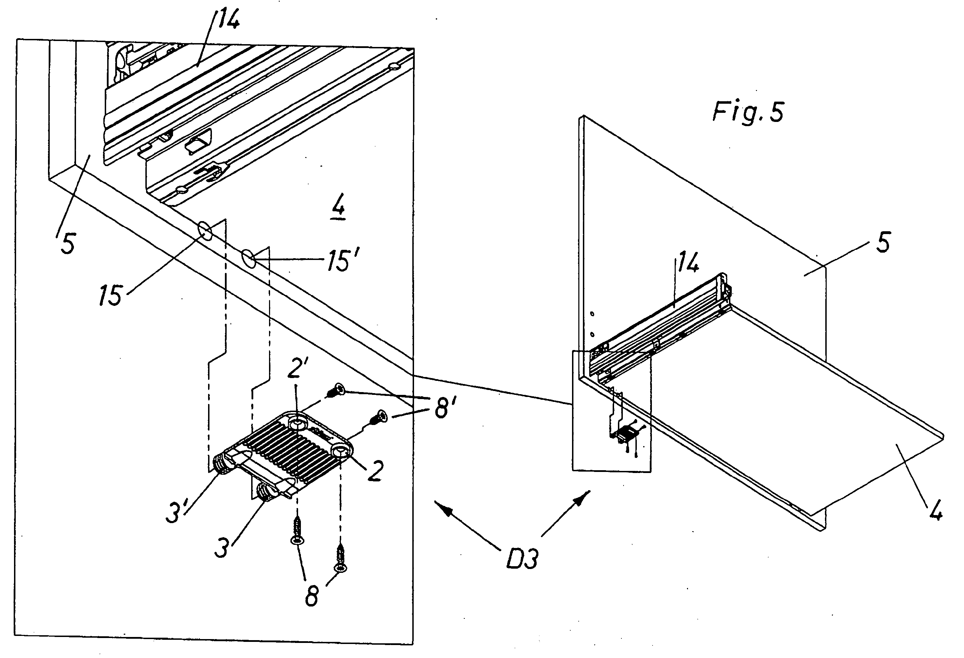

Fig. 5 zeigt eine Unteransicht auf den Fachboden 4 mit einer dazu vertikal stehenden Frontblende 5. Diese beiden Möbelteile 4, 5 sind über eine nicht näher dargestellte Verbindungseinrichtung in der Zarge 14 miteinander verbunden, die jedoch im montierten Zustand eine gewisse Bewegbarkeit der beiden Möbelteile 4, 5 zueinander erlaubt. Beispielsweise kann eine Höhenverstellung der Frontblende 5 mit einem Exzenter in der Zarge 14 erfolgen. Bei hohen Frontblenden tritt ohne Verwendung einer Stabilisierungsvorrichtung 1 eine Instabilität durch die resultierende Hebelwirkung auf. Daher wird - wie in Fig. 5 und in der vergrößerten Detailansicht D3 gezeigt - die Stabilisierungsvorrichtung 1 mit seinen als Spreizdübel ausgebildeten Befestigungsstellen 3, 3' in entsprechende Bohrungen 15, 15 in der Frontblende 5 fixiert. Die Befestigungsstellen 2, 2' werden mit Schrauben 8 mit der Unterseite des Fachbodens 4 fest verschraubt. Selbstverständlich können mehrere Stabilisierungsvorrichtungen 1 entlang der Kante zwischen Fachboden 4 und Frontblende 5 montiert werden.

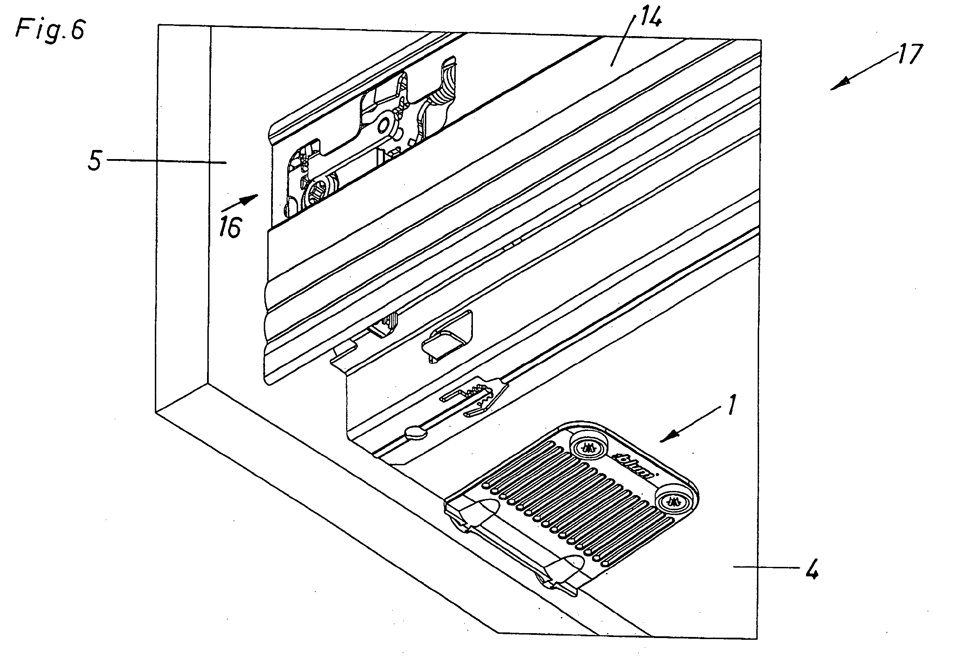

Fig. 6 zeigt eine Teilansicht einer Schublade 17 von unten. Die Frontblende 5 ist mit dem Fachboden 4 über die Zarge 14 bewegbar gehaltert. Hiefür ist eine - lediglich angedeutete - Verbindungseinrichtung 16 im Inneren der Zarge 14 vorgesehen. Zusätzlich zu der Verbindungseinrichtung 16 ist zumindest eine Stabilisierungsvorrichtung 1 einerseits an der Frontblende 5 und andererseits am Fachboden 4 befestigt, wobei der flexible Mittelteil 6 eine gewisse Bewegbarkeit aber gleichzeitig eine Stabilisierung der Frontblende 5 zum Fachboden 4 ermöglicht.

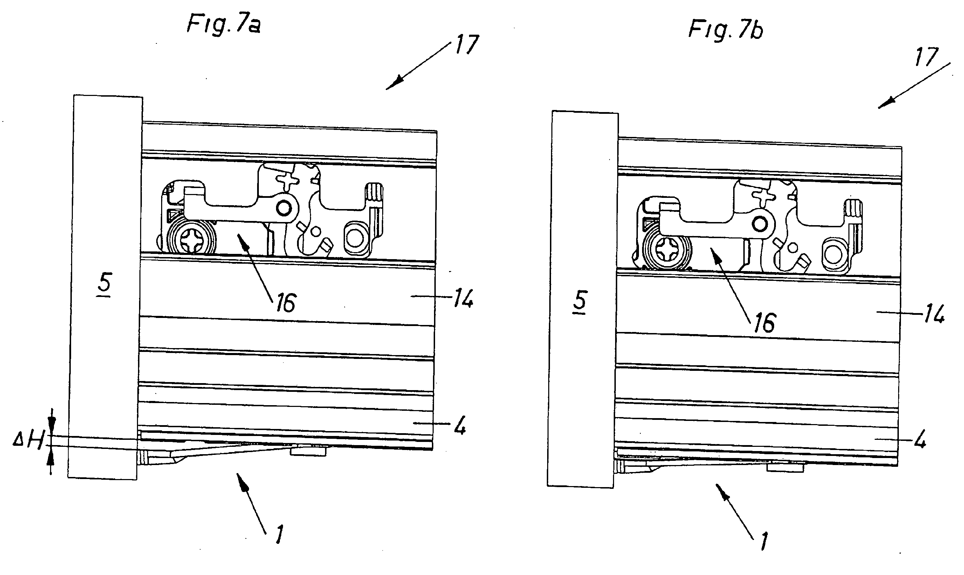

Fig. 7a und 7b zeigen eine Schublade 17 in einer Seitenansicht. Die Schublade 17 weist einen Fachboden 4, Seitenzargen 14 und eine über die Halte- und Verstelleinrichtung 16 bewegbar angeordnete Frontblende 5 auf. Die einerseits an der Frontblende 5 und andererseits am Fachboden 4 befestigte Stabilisierungsvorrichtung 1 erlaubt eine Vertikalverstellung der Frontblende 5 um den Betrag ΔH. In Fig. 7b ist die Stabilisierungsvorrichtung 1 in der Montagelage gezeigt, wobei diese im Wesentlichen am Fachboden 4 anliegt.

Die Erfindung beschränkt sich nicht auf die gezeigten Ausführungsbeispiele, sondern umfasst bzw. erstreckt sich auf alle technischen Äquivalente, welche in die Reichweite der nachfolgenden Ansprüche fallen können. Auch sind die in der Beschreibung gewählten Lageangaben, wie zum Beispiel oben, unten, seitlich usw. auf die übliche Einbaulage bzw. auf die unmittelbar beschriebene sowie dargestellte Figur bezogen und sind bei einer Lageänderung sinngemäß auf die neue Lage zu übertragen.

## Patentansprüche

1. Schublade (17) mit zwei Seitenwänden (14), einem Fachboden (4) und mit einer Frontblende (5), wobei die Frontblende (5) verstellbar an den Seitenwänden (14) gelagert ist, wobei eine Stabilisierungsvorrichtung (1) einerseits an der Frontblende (5) und andererseits am Fachboden (4) befestigt ist, wobei die Stabilisierungsvorrichtung (1) zumindest eine erste Montagestelle (2, 2') zur Befestigung am Fachboden (4) und zumindest eine zweite Montagestelle (3, 3') zur Befestigung an der Frontblende (5) aufweist, wobei zwischen der ersten Montagestelle (2, 2') und der zweiten Montagestelle (3, 3') zumindest ein flexibler Mittelteil (6) angeordnet ist, der die erste Montagestelle (2, 2') und die zweite Montagestelle (3, 3') miteinander verbindet, **dadurch gekennzeichnet, dass** die erste Montagestelle (2, 2') und die zweite Montagestelle (3, 3') relativ zueinander zumindest in einer Richtung (X, Y) quer zur Richtung (Z) einer gedachten Verbindungslinie (13) zwischen der ersten Montagestelle (2, 2') und der zweiten Montagestelle (3, 3') beweglich sind.

2. Schublade nach Anspruch 1, dass der Mittelteil (6) in Richtung (Z) einer gedachten Verbindungslinie (13) zwischen der ersten Montagestelle (2, 2') und der zweiten Montagestelle (3, 3') zugfest ausgebildet ist.

3. Schublade nach Anspruch 1 oder 2, **dadurch gekennzeichnet, dass** der flexible Mittelteil (6) zumindest ein Seilstück umfasst.

4. Schublade nach Anspruch 1 oder 2, **dadurch gekennzeichnet, dass** der flexible Mittelteil (6) zumindest eine flexible Stange umfasst.

5. Schublade nach Anspruch 1 oder 2, **dadurch gekennzeichnet, dass** der flexible Mittelteil (6) zwei oder mehrere - vorzugsweise zueinander parallel beabstandet angeordnete - biegsame Lamellen (12) aufweist.

6. Schublade nach einem der Ansprüche 1 bis 5, **dadurch gekennzeichnet, dass** an zumindest einer Montagestelle (3, 3') ein Spreizdübel - vorzugsweise mit einer darin vormontierten Schraube (8') - angeordnet ist, der zum Einsetzen in eine Bohrung (15, 15') eines Möbelteiles (4, 5) ausgebildet ist.

7. Schublade nach einem der Ansprüche 1 bis 6, **dadurch gekennzeichnet, dass** zumindest eine Montagestelle (2, 2') als Durchgangsbohrung zum Einsetzen einer in ein Möbelteil (4, 5) einschraubbaren Schraube (8) ausgeführt ist.

8. Schublade nach einem der Ansprüche 1 bis 7, **dadurch gekennzeichnet, dass** zumindest zwei Montagestellen (2, 2'; 3, 3') auf jeder Seite des flexiblen Mittelteiles (6) vorgesehen sind.

9. Schublade nach einem der Ansprüche 1 bis 8, **dadurch gekennzeichnet, dass** die Stabilisierungsvorrichtung - abgesehen von allfällig vormontierten Schrauben (8, 8') - einstückig ausgebildet ist.

10. Schublade nach einem der Ansprüche 1 bis 9, **dadurch gekennzeichnet, dass** die Stabilisierungsvorrichtung - abgesehen von vormontierten Schrauben (8, 8') - aus Kunststoff besteht.

11. Möbel mit einer Schublade nach einem der Ansprüche 1 bis 10.

## Claims

1. A drawer (17) having two side walls (14), a drawer base (4) and a front panel (5), wherein the front panel (5) is adjustably arranged on the side walls (14), wherein a stabilizing device (1) is one the one hand arranged on the front panel (5) and on the other hand arranged on the drawer base (4), wherein the stabilizing device (1) includes at least a first mounting location (2, 2') to be fastened to the drawer base (4) and at least a second fastening location (3, 3') to be fastened to the front panel (5), wherein arranged between the first mounting location (2, 2') and the second mounting location (3, 3') is at least one flexible middle portion (6) which connects the first mounting location (2, 2') and the second mounting location (3, 3') to each other, **characterized in that** the first mounting location (2, 2') and the second mounting location (3, 3') are movable relative to each other at least in a direction (X, Y) transverse to a direction (Z) of a notional connecting line (13) between the first mounting location (2, 2') and the second mounting location (3, 3').

2. The drawer according to claim 1, **characterized in that** the middle portion (6), in a direction (Z) of a notional connecting line (13) between the first mounting location (2, 2') and the second mounting location (3, 3'), has a tension-proof configuration.

3. The drawer according to claim 1 or 2, **characterized in that** the flexible middle portion (6) includes at least one cable portion.

4. The drawer according to claim 1 or 2, **characterized in that** the flexible middle portion (6) includes at least one flexible rod.

5. The drawer according to claim 1 or 2, **characterized in that** the flexible middle portion (6) includes at least two or more bendable fins (12), preferably arranged parallel and spaced from each other.

6. The drawer according to one of the claims 1 to 5, **characterized in that** arranged on at least one mounting location (3, 3') is an expansion dowel - preferably with a pre-mounted screw (8') arranged therein - wherein the expansion dowel is configured so as to be inserted into a bore (15, 15') of a furniture part (4, 5).

7. The drawer according to one of the claims 1 to 6, **characterized in that** at least one mounting location (2, 2') is configured as a through-bore for inserting a screw (8) to be screwed into a furniture part (4, 5).

8. The drawer according to one of the claims 1 to 7, **characterized in that** at least two mounting locations (2, 2'; 3, 3') are provided on each side of the flexible middle portion (6).

9. The drawer according to one of the claims 1 to 8, **characterized in that** the stabilizing device - apart from any pre-mounted screws (8, 8') - is of a onepiece configuration.

10. The drawer according to one of the claims 1 to 9, **characterized in that** the stabilizing device - apart from any pre-mounted screws (8, 8') - is made of plastic material.

11. An item of furniture having a drawer according to one of the claims 1 to 10.

## Revendications

1. Tiroir (17) avec deux parois latérales (14), une tablette (4) et avec un panneau frontal (5), dans lequel le panneau frontal (5) est logé de façon déplaçable sur les parois latérales (14), dans lequel un dispositif de stabilisation (1) est fixé, d'une part, au panneau frontal (5) et, d'autre part, à la tablette (4), dans lequel le dispositif de stabilisation (1) présente au moins un premier endroit de montage (2, 2') destiné à la fixation à la tablette (4) et au moins un deuxième endroit de montage (3, 3') destiné à la fixation au panneau frontal (5), dans lequel entre le premier endroit de montage (2, 2') et le deuxième endroit de montage (3, 3') est disposée au moins une partie intermédiaire souple (6), qui relie ensemble le premier endroit de montage (2, 2') et le deuxième endroit de montage (3, 3'), **caractérisé en ce que** le premier endroit de montage (2, 2') et le deuxième endroit de montage (3, 3') sont mobiles l'un par rapport à l'autre au moins dans un sens (X, Y) transversalement au sens (Z) d'une ligne de jonction imaginaire (13) entre le premier endroit de montage (2, 2') et le deuxième endroit de montage (3, 3').

2. Tiroir selon la revendication 1, **caractérisé en ce que** la partie intermédiaire (6) est conçue de manière résistante à la traction dans le sens (Z) d'une ligne de jonction imaginaire (13) entre le premier endroit de montage (2, 2') et le deuxième endroit de montage (3, 3').

3. Tiroir selon la revendication 1 ou 2, **caractérisé en ce que** la partie intermédiaire souple (6) comprend au moins un morceau de câble.

4. Tiroir selon la revendication 1 ou 2, **caractérisé en ce que** la partie intermédiaire souple (6) comprend au moins une barre souple.

5. Tiroir selon la revendication 1 ou 2, **caractérisé en ce que** la partie intermédiaire souple (6) présente deux ou plusieurs lamelles flexibles (12) - disposées de préférence en étant espacées parallèlement les unes aux autres.

6. Tiroir selon l'une des revendications 1 à 5, **caractérisé en ce que** sur au moins un endroit de montage (3, 3') est disposée une cheville à expansion - de préférence avec une vis préassemblée dedans (8') -, qui est conçue pour être placée dans un alésage (15, 15') d'une partie de meuble (4, 5).

7. Tiroir selon l'une des revendications 1 à 6, **caractérisé en ce que** au moins un endroit de montage (2, 2') est réalisé comme un alésage traversant pour le placement d'une vis (8) pouvant être vissée dans une partie de meuble (4, 5).

8. Tiroir selon l'une des revendications 1 à 7, **caractérisé en ce que** au moins deux endroits de montage (2, 2' ; 3, 3') sont prévus sur chaque côté de la partie intermédiaire souple (6).

9. Tiroir selon l'une des revendications 1 à 8, **caractérisé en ce que** le dispositif de stabilisation est conçu d'une seule pièce - à l'exception des vis éventuellement préassemblées (8, 8').

10. Tiroir selon l'une des revendications 1 à 9, **caractérisé en ce que** le dispositif de stabilisation - à l'exception des vis préassemblées (8, 8') - est composé de matière synthétique.

11. Meuble avec un tiroir selon l'une des revendications 1 à 10.
